# EUROPÄISCHE PATENTSCHRIFT

(11) **EP 2 539 196 B1**
(45) Veröffentlichungstag und Bekanntmachung des Hinweises auf die Patenterteilung: **22.01.2014**
(21) Anmeldenummer: 10787294.7
(22) Anmeldetag: 26.11.2010
(51) Int. Cl.: B60T 17/02

(54) **DRUCKLUFTAUFBEREITUNGSEINRICHTUNG FÜR KRAFTFAHRZEUGE**
VEHICLE COMPRESSED AIR SUPPLY DEVICE
DISPOSITIF DE PRÉPARATION DE L'AIR COMPRIMÉ POUR VÉHICULE

(30) Priorität: 24.02.2010 DE 102010009035
(43) Veröffentlichungstag der Anmeldung: 02.01.2013
(73) Patentinhaber: WABCO GmbH, 30453 Hannover (DE)
(72) Erfinder: SCHÄL, Andreas, 31171 Nordstemmen (DE)
(74) Vertreter: Lauerwald, Jörg
(86) Internationale Anmeldenummer: PCT/EP2010/007179
(87) Internationale Veröffentlichungsnummer: WO 2011/103893

(56) Entgegenhaltungen:
- WO-A1-2007/142008
- DE-A1- 19 936 283
- DE-B4- 19 638 837

## Beschreibung

Die Erfindung betrifft eine Druckluftaufbereitungseinrichtung mit einer Druckluft führenden Druckleitung, in der in Durchströmungsrichtung hintereinander eine Trocknungseinrichtung und ein Rückschlagventil angeordnet sind, wobei ein druckbetätigbares Zufuhrsteuerelement bei Anliegen des Steuerdrucks die Druckluftzufuhr zur Trocknungseinrichtung unterbindet, gemäß dem Oberbegriff des Patentanspruchs 1 sowie ein Kraftfahrzeug mit einer derartigen Druckluftaufbereitungseinrichtung.

Kraftfahrzeuge weisen pneumatisch betriebene Einrichtungen auf, beispielsweise eine Druckluftbremsanlage, welche mit Druckluft versorgt werden müssen. Die Druckluft wird üblicherweise von einem Kompressor bereitgestellt, der Luft aus der Atmosphäre ansaugt und einen Druckluftstrom in die Druckleitung abgibt. Da die in der Luft enthaltene Luftfeuchtigkeit kondensiert und dadurch Korrosion verursachen kann, was die Lebensdauer von Bauelementen erheblich verkürzt, wird die Druckluft nach Verlassen des Verdichters getrocknet, bevor sie in das Leitungsnetz eingespeist wird. Zu diesem Zweck ist in der Druckleitung eine Trocknereinheit angeordnet. Es ist bekannt, Zufuhrsteuerelemente am Eingang der Druckleitung anzuordnen, um die Druckluftförderung durch den Kompressor ein- bzw. auszuschalten, um den Druck in der Druckleitung und damit im Verbrauchernetz zu steuern. Das Zufuhrsteuerelement kann ein mit Druckluft betätigter Steuereingang des Kompressors sein.

DE 196 38 837B4 und WO 2007/142008 A1 offenbart eine Druckmittelaufbereitungseinrichtung, welche zur Druckmittelversorgung einen Kompressor und ein dem Kompressor zugeordnetes 3/2-Wegeventil als Zufuhrsteuerelement vorsieht. Der kontinuierliche erzeugte Druckluftstrom kann über das Zufuhrsteuerventil entweder den nachgeschalteten Elementen der Druckaufbereitungseinrichtung oder Atmosphäre zugeführt werden. Das Zufuhrsteuerventil ist mittels seines Steuereingangs durch Druckluft betätigbar. Diesem Zufuhrsteuerventil sind bei der bekannten Einrichtung ein Lufttrockner sowie ein Rückschlagventil nachgeschaltet. An das Rückschlagventil ist dabei ein Mehrkreisschutzventil angeschlossen, an welches die einzelnen Druckmittelkreise der Druckmittelanlage anschließbar sind. An den Steuereingang des Zufuhrsteuerventils ist eine Druckregeleinrichtung angeschlossen, welche eine hinter dem Rückschlagventil aus der Druckleitung abzweigende Vorratsleitung mit dem Steuereingang des Zufuhrsteuerventils verbinden kann, um die Druckluftzufuhr zur Druckleitung zu unterbinden. Die Druckregeleinrichtung bei der bekannten Anordnung besteht im Wesentlichen aus einem druckbetätigbaren Governor-Ventil und einem elektrisch betätigbaren Steuerventil. Ein erster Steuereingang des Governor-Ventils ist an die Vorratsleitung angeschlossen und arbeitet gegen eine permanente Rückstellkraft einer Ventilfeder. Der Ausgang des Governor-Ventils ist an das Zufuhrsteuerventil angeschlossen. Das elektrisch betätigbare Steuerventil ist mit seinem Einlass ebenfalls an die Vorratsleitung angeschlossen und ist mit seinem Auslass mit einem zweiten Steuereingang des Governor-Ventils verbunden, wobei der zweite Steuereingang dem ersten Steuereingang des Governor-Ventils entgegenwirkt. Das elektrisch betätigbare Steuerventil bzw. dessen Steuereingang ist über eine elektrische Leitung mit einem elektronischen Steuergerät verbunden. Das Steuergerät erzeugt in Abhängigkeit einer Druckmessung in der Vorratsleitung und damit der Druckleitung ein Steuersignal zur Steuerung des elektrischen Ventils.

Das elektrisch betätigbare Ventil wirkt als Vorsteuerung des Governor-Ventils und verursacht eine Umschaltung des Governor-Ventils zur Einwirkung auf die Druckluftzufuhr in die Druckleitung. Sobald das elektrisch betätigte Ventil den zweiten Steuereingang des Governor-Ventils mit der Vorratsleitung verbindet, heben sich die Steuerkräfte der beiden druckgesteuerten Steuereingänge des Governor-Ventils gegenseitig auf und die Rückstellkraft seiner Ventilfeder schaltet das Governor-Ventil in die durchgängige Stellung. In dieser Schaltstellung ist die Vorratsleitung mit dem Zufuhrsteuerventil am Kompressor verbunden, so dass die Druckluftzufuhr in die Druckleitung getrennt und der Druckluftstrom des Kompressors der Atmosphäre zugeführt wird.

Obwohl im Normalbetrieb die Drucksteuerung bei der bekannten Einrichtung über das elektrisch betätigbare Ventil erfolgt, kann die bekannte Einrichtung bei Stromausfall und damit Ausfall des Steuerventils einen Notmodus aufrechterhalten, wobei die Zufuhrsteuerung allein druckabhängig erfolgt. Bei Stromausfall schaltet sich das elektrisch betätigbare Ventil in die nicht durchgängige Schaltstellung, so dass der zweite Steuereingang des Governor-Ventils ebenfalls nicht betätigt wird. Das Governor-Ventil verbindet dann die Vorratsleitung mit dem Zufuhrsteuerventil, wenn der Druck in der Druckleitung und damit der Vorratsleitung über den ersten Steuereingang des Governor-Ventils die entgegenstehende Federkraft überwindet. Durch die Einstellung der Rückstellkraft der Ventilfeder des Governor-Ventils wird der vorgesehene Governor-Umschaltdruck bestimmt, der vom Governor über entsprechende Schaltung der Druckluftzufuhr gehalten wird.

Die bekannte Druckluftaufbereitungseinrichtung kann zwar bei Ausfall der elektrischen Steuerenergie eine druckabhängige Steuerung des Arbeitsdrucks über das Governor-Ventil in einem Notmodus aufrechterhalten. Eine unbegrenzte Weiterfahrt des Kraftfahrzeugs im Notmodus ist mit der bekannten Druckluftaufbereitungseinrichtung nicht möglich, da nach Ausfall der elektrischen Steuerenergie sehr rasch die Qualität der Druckluftaufbereitung abnimmt.

Der vorliegenden Erfindung liegt die Aufgabe zugrunde, eine Druckluftaufbereitungseinrichtung der gattungsgemäßen Art derart weiterzubilden, dass eine unbegrenzte Weiterfahrt des Kraftfahrzeugs bei Ausfall der elektrischen Steuerung der Ventile der Druckluftaufbereitungseinrichtung möglich ist.

Diese Aufgabe wird erfindungsgemäß durch eine Druckluftaufbereitungseinrichtung mit den Merkmalen des Patentanspruchs 1 und ein Kraftfahrzeug mit den Merkmalen des Patentanspruchs 10 gelöst.

Der Erfindung liegt die Erkenntnis zugrunde, dass die zur Luftaufbereitung erforderliche Trocknungseinrichtung der durchströmenden Druckluft durch Kondensation und Adsorption die Feuchtigkeit entzieht und das Adsorptionsmittel in der Trocknungseinrichtung eine begrenzte Wasseraufnahmekapazität hat. Die Trocknungseinrichtung muss deshalb in bestimmten Abständen regeneriert werden. Schaltet die bekannte Einrichtung zur Steuerung der Druckluftaufbereitungseinrichtung bei Ausfall der elektrischen Steuerenergie in den Notmodus, so wird zwar zunächst ein Fahrbetrieb des Kraftfahrzeuges aufrechterhalten. Die Wasseraufnahmekapazität der Trocknungseinrichtung ist jedoch rasch erschöpft, so dass die Funktion der Druckluftaufbereitungseinrichtung nicht mehr gewährleistet ist.

Mit der erfindungsgemäßen Druckluftaufbereitung wird auch bei Ausfall der elektrischen Energieversorgung der Steuerung der Ventile der Druckluftaufbereitung regelmäßig eine Regeneration der Trocknungseinrichtung durchgeführt, da die Regeneration durch das bei Ausfall der elektrischen Energieversorgung weiterhin aktive Governor-Ventil gesteuert wird. Ein Kraftfahrzeug, das mit der erfindungsgemäßen Druckluftaufbereitungseinrichtung ausgerüstet ist, kann daher nahezu unbegrenzt seine Fahrt fortführen. Das Governor-Ventil übernimmt im stromlosen Betrieb die Steuerung sowohl der Druckluftaufbereitung als auch der Regeneration der Trocknungseinrichtung.

Unter Governor-Ventil ist ein druckbetätigbares Ventil zu verstehen, welches auf die Steuerung der Druckluftzufuhr wirkt und auf dessen Steuereingang der Systemdruck wirkt, den die Druckluftaufbereitungseinrichtung für die angeschlossenen pneumatischen Kreise erzeugt. Eine Vorsteuerung des Governor-Ventils ist gegeben, wenn ein zweiter Steuereingang des Governor-Ventils, der dem ersten Steuereingang entgegen wirkt, abhängig von dem vorsteuernden Magnetventil mit dem Systemdruck beaufschlagbar ist.

Das Governor-Ventil, welches bei elektrischem Betrieb von einem elektrisch betätigbaren Magnetventil vorgesteuert ist, steuert während des elektrischen Betriebs die Druckluftaufbereitung auf einem hohen Druckniveau. Bei Ausfall der elektrischen Energie und einem dadurch bedingten Ausfall der Vorsteuerung spricht das Governor-Ventil bei Anliegen eines Drucks an, welcher die mechanische Rückstellkraft des Governor-Ventils überwindet, beispielsweise eine Federkraft. Das zweite Druckniveau, bei dem das Governor-Ventil bei Ausfall der elektrischen Versorgung anspricht, ist niedriger als das hohe Druckniveau bei elektrisch betätigter Vorsteuerung, so dass bei Ausfall der elektrischen Versorgung ein weiterer Betrieb der Druckluftaufbereitungseinrichtung auf niedrigerem Druckniveau erfolgt.

In einer vorteilhaften Ausführungsform ist ein Versorgungsanschluss des Governor-Ventils mit einer Vorratsleitung verbunden, welcher aus einer an die Druckleitung anschließenden Systemdruckleitung abzweigt. Die Druckleitung und die Systemdruckleitung sind durch ein Rückschlagventil getrennt. Ein Arbeitsanschluss des Governor-Ventils ist an ein druckbetätigbares Zufuhrsteuerelement angeschlossen, welches bei Anliegen des Steuerdrucks die Druckluftzufuhr zur Trocknungseinrichtung unterbindet und eine Regeneration ermöglicht. Als Arbeitsanschluss ist dabei derjenige Anschluss eines Ventils zu verstehen, welcher abhängig von der Ventilstellung mit dem Versorgungsanschluss des Ventils verbindbar ist, wobei der Versorgungsanschluss derjenige Anschluss des Ventils ist, der ständig druckbeaufschlagt ist und der Druckluftversorgung dient. Sofern ein Ventil über einen Entlüftungsanschluss verfügt, so ist dies ein solcher Anschluss, der alternativ zum Versorgungsanschluss mit dem Arbeitsanschluss verbindbar ist. Zur Durchführung der Regeneration werden der Arbeitsanschluss und der Versorgungsanschluss des Governor-Ventils von dem ersten Steuereingang des Governor-Ventils, der an die Vorratsleitung angeschlossen ist und gegen eine permanente Rückstellkraft arbeitet, miteinander verbunden.

Als Mittel zur Durchführung der Regeneration sind eine an das Governor-Ventil angeschlossene Regenerationsleitung und eine Entlüftungsleitung vorgesehen. Die Regenerationsleitung zur Zuführung von Regenerationsluft für die Trocknungseinrichtung mündet in Durchströmungsrichtung der Druckleitung hinter der Trocknungseinrichtung in die Druckleitung ein. Die Entlüftungsleitung zweigt in Durchströmungsrichtung vor der Trocknungseinrichtung aus der Druckleitung ab und wird während der Regeneration frei gegeben.

Durch die Regenerationsleitung, die an das Governor-Ventil angeschlossen ist; kann in dem Moment, wo das Governor-Ventil die durchgängige Stellung einnimmt, Druckluft durch die Regenerationsleitung zur Trocknungseinrichtung geleitet werden.

In der zwischen Vorratsleitung und Regenerationsleitung durchgängigen Schaltstellung des Governor-Ventils ist eine Durchströmung der Trocknungseinrichtung in entgegengesetzter Strömungsrichtung möglich, um das Trocknungsmittel zu regenerieren. Der Regenerationsluftstrom nimmt die Feuchtigkeit aus der Trocknungseinrichtung mit. Er kann durch die Entlüftungsleitung abgeführt werden, welche in Durchströmungsrichtung vor der Trocknungseinrichtung aus der Druckleitung abzweigt. Die Regenerationsleitung ist dabei zweckmäßig zwischen der Trocknungseinrichtung und dem Rückschlagventil an die Druckleitung angeknüpft, so dass zur Regeneration des Trockners Druckluft aus den Systembehältern unter Umgehung des Rückschlagventils zurück strömen kann.

Mit der erfindungsgemäßen Anordnung einer Regenerationsleitung zwischen dem Governor-Ventil und der Druckleitung kann mit einfachen Mitteln eine Regeneration der Trocknungseinrichtung mit Druckluft aus den Systembehältern erfolgen und auf einem separaten Regenerationsbehälter für die Trocknungseinrichtung verzichtet werden. Die Regenerationsluft wird einer Vorratsleitung entnommen, die hinter dem Rückschlagventil der Druckleitung von der Systemdruckleitung abzweigt. Die Vorratsleitung übernimmt somit sowohl die Funktion der Zuführung von Regenerationsluft als auch der druckabhängigen Steuerung des Governor-Ventils im stromlosen Betrieb.

In einer bevorzugten Ausführungsform unterbindet das Governor-Ventil während des Regenerationsbetriebes in seiner durchgängigen Stellung die Druckluftzufuhr zur Trocknungseinrichtung, indem es die Entlüftungsleitung frei gibt. Hierzu ist in der Entlüftungsleitung ein druckbetätigbares Entlüftungsventil angeordnet, dessen Steuereingang mit der Regenerationsleitung fluidisch verbunden ist. Dadurch wird die Entlüftungsleitung nur nach Einleitung der Regeneration durch Verbindung der Regenerationsleitung mit der Vorratsleitung geöffnet.

Im mechanischen Betrieb, das heißt ohne elektrische Versorgung der Ventile, funktioniert das Entlüftungsventil auch als Zufuhrsteuerelement für die Druckluftzufuhr in der Druckleitung. Bei geöffneter Entlüftungsleitung wird der eingespeiste Druckluftstrom eines Kompressors durch die Entlüftungsleitung abgeleitet. Um sowohl Zufuhrsteuerung als auch Regeneration im stromlosen Betrieb zu ermöglichen, ist der Öffnungsdruck des Entlüftungsventils mit dem Ansprechdruck des Governor-Ventils abgestimmt, so dass bei Belüften der Vorratsleitung durch das Governor-Ventil das Entlüftungsventil sicher öffnet.

Eine präzise Steuerung der Regeneration ist in einer vorteilhaften Ausführungsform der elektrischen Steuerung der Druckluftaufbereitungseinrichtung möglich, wenn das elektrisch betätigbare Magnetventil, welches das Governor-Ventil vorsteuert, als den Luftstrom in der Regenerationsleitung steuerndes Regenerationsventil angeordnet ist. Ein Versorgungsanschluss des Regenerationsventils ist dabei an die Vorratsleitung angeschlossen und durch Schalten eines elektrischen Steuereingangs mit einem Arbeitsanschluss verbindbar, welcher an den zweiten Steuereingang des Governor-Ventils angeschlossen ist. Der zweite Steuereingang wirkt dem ersten Steuereingang des Governor-Ventils entgegen. Das Governor-Ventil wird dadurch von dem Regenerationsventil vorgesteuert, so dass die Durchführung der Regeneration bei entsprechender Schaltung des Regenerationsventils erfolgt und bei Ausfall der elektrischen Energieversorgung das Governor-Ventil die Steuerung übernimmt.

Dabei ist ein weiteres elektrisch betätigbares Magnetventil als die Druckluftzufuhr steuerndes Kompressorventil angeordnet, wodurch der Regenerationsbetrieb der Druckluftaufbereitungseinrichtung bei elektrischer Steuerung von der Drucksteuerung entkoppelt wird. Das Kompressorventil ist zu diesem Zweck zwischen der Vorratsleitung und einem Steuereingang eines Zufuhrsteuerelements angeordnet. Im Normalbetrieb der Druckluftaufbereitungseinrichtung kann somit die Regeneration in steuerbaren Zeitabständen durchgeführt werden, indem das Regenerationsventil geschaltet wird. Die Drucksteuerung erfolgt davon losgelöst, indem das Kompressorventil in die durchgängige Stellung durch Zuführung eines elektrischen Signals geschaltet wird und dadurch ein Arbeitsanschluss des Kompressorventils, der mit dem Zufuhrsteuerelement verbunden ist, mit einem Versorgungsanschluss verbunden wird.

Das dem Kompressorventil zugeordnete Zufuhrsteuerelement ist in der Druckleitung in Durchströmungsrichtung vor der Trocknungseinrichtung angeordnet und beherrscht die Zuführung der Druckluft in die Druckleitung. Vorteilhaft bildet ein druckbetätigbarer Steuerschalter des Kompressors das Zufuhrsteuerelement, so dass der Kompressor direkt gesteuert wird. Alternativ kann auch ein druckbetätigbarer Steuerauslass des Kompressors als Zufuhrsteuerelement vorgesehen sein, welcher bei Anliegen des pneumatischen Steuersignals den Kompressorluftstrom in die Atmosphäre leitet. In einer weiteren alternativen Ausführungsform bildet ein separates 3/2-Wege-Ventil in der Druckleitung das Zufuhrsteuerelement bei elektrischer Steuerung der Druckluftaufbereitungseinrichtung.

Im Normalbetrieb hält das Entlüftungsventil die Entlüftungsleitung geschlossen, so dass Druckverluste in der Druckleitung vermieden sind. Sollte die elektrische Energieversorgung der Druckluftsaufbereitungseinrichtung und damit die Schaltung der Druckluftzufuhr über das Kompressorventil ausfallen, bildet das Entlüftungsventil das Zufuhrsteuerelement der Druckluftaufbereitungseinrichtung. Im stromlosen Backup-Betrieb öffnet das Governor-Ventil bei Erreichen des vorgegebenen Abschaltdrucks in der Vorratsleitung das Entlüftungsventil, so dass der Druckluftstrom des Kompressors durch die Entlüftungsleitung abgeführt wird. Da das Governor-Ventil erst nach einer gewissen Druckhysterese schließt, bleibt das Entlüftungsventil geöffnet, bis der Systemdruck unter einen Rückschaltdruck fällt, der durch den Abschaltdruck abzüglich der Hysterese bestimmt ist. Das Entlüftungsventil kann ein einfach gestaltetes 2/2-Wege-Ventil sein, dessen Steuereingang unter dem Druck der Regenerationsleitung gegen eine Federkraft die Sperrung der Entlüftungsleitung aufhebt und die Entlüftungsleitung auf durchgängig schaltet. Gleichzeitig wird im stromlosen Backup-Betrieb bei Erreichen des Abschaltdrucks die Regeneration des Trocknungsmittels durch rückströmende Luft eingeleitet. Wieder wird diese Regeneration so lange durchgeführt, bis das Governor-Ventil wieder schließt, also bis der Systemdruck unter den Abschaltdruck abzüglich Hysterese fällt.

Ist in der Regenerationsleitung ein Rückschlagventil angeordnet, so werden die Drucksteuerventile sicher vor dem Druck der Druckleitung geschützt und eine unerwünschte Abströmung aus der Druckleitung vermieden.

Ist in der Regenerationsleitung ein Drosselelement angeordnet, so wird die aus den Systembehältern bei der Regeneration zurückströmende Druckluft vor der Zuführung zum Trockner auf das geeignete Druckniveau entspannt. Das Drosselelement kann dabei als Blende oder in vorteilhafter Weiterbildung als schaltbares Drosselventil ausgebildet sein.

Mit der erfindungsgemäßen Anordnung kann eine Baugruppe als Grundlage für elektrisch und mechanisch gesteuerte Druckluftaufbereitungseinrichtungen zur Verfügung gestellt werden. An die im Wesentlichen gleiche Grund-Baugruppe werden je nach Einsatz weitere Bauteile zugefügt und gegebenenfalls unterschiedlich angeschlossen

Vorteilhaft ist das Regenerationsventil als 3/2-Wege-Ventil ausgebildet, dessen dritter Anschluss als Entlüftung wirkt, so dass mit einfachen Mitteln nach einer Regeneration der Trocknungseinrichtung der zweite Steuereingang des Governor-Ventils entlüftet wird. Das 3/2-Wege-Regenerationsventil verbindet in der unbetätigten Schaltstellung den Steuereingang des Governor-Ventils mit der Entlüftungsleitung, so dass bei einem Anlegen des Steuersignals am Regenerationsventil und Überführung des Regenerationsventils in die zweite Schaltstellung sofort der Steuerdruck an den Steuereingang des Governor-Ventils gelegt wird.

In einer vorteilhaften Ausführungsform der Erfindung werden beide elektrisch betätigbare Magnetventile, also Regenerationsventil und Kompressorventil, von einer elektronischen Steuereinheit angesteuert, so dass eine präzise Steuerung des Arbeitsdrucks im Druckluftsystems des Kraftfahrzeugs und der turnusmäßigen Regeneration der Trocknungseinrichtung nach vorgegebenen Kennfelddaten erfolgen kann. Der Steuereinheit werden dabei geeignete Messparameter eingegeben und die vorher ermittelten optimalen Steuerwerte vorgegeben, so dass eine optimale Ansteuerung des Regenerationsventils bzw. des Kompressorventils für die Steuerung der Druckluftzufuhr erfolgen kann. Sollte die elektrische Steuerenergie ausfallen, so fällt die Druckluftaufbereitungseinrichtung in den Notbetrieb (Backup), wobei erfindungsgemäß das Governor-Ventil die Drucksteuerung und die Steuerung der Trocknerregeneration übernimmt.

Das Regenerationsventil kann mit einem Öffnungsdurchmesser von 1 mm ausgeführt werden, um die pneumatische Betätigung des Governor-Ventils sicherzustellen. Für das Kompressorventil wird ein Öffnungsdurchmesser von 1,6 mm als vorteilhaft gesehen, um eine sichere Schaltung des Zufuhrsteuerelements und des in der Druckleitung bzw. des steuerbaren Druckauslasses des Kompressors zu gewährleisten. Das Governor-Ventil wird vorteilhaft mit einem größeren Öffnungsdurchmesser als die elektrisch betätigbaren Magnetventile ausgestattet, um einen hinreichenden Durchfluss des Regenerationsluftstroms zu gewährleisten. Für den Öffnungsdurchmesser des Governor-Ventils wird ein Wert von etwa 2 mm als vorteilhaft gesehen.

In einer vorteilhaften Ausführungsform der Erfindung wird die Strömung der Regenerationsluft mittels eines durch Druckbetätigung schaltbaren Drosselventils bestimmt, dessen Steuereingang mit dem Regenerationsventil verbunden ist. Dadurch wirkt das Regenerationsventil so lange, wie es in seinem betätigten Zustand das Governor-Ventil beaufschlagt und vorsteuert, auch auf das Drosselventil und kann beispielsweise den für Regenerationsbetrieb vorgesehenen Durchtrittsquerschnitt des Drosselventils ausschalten. Das schaltbare Drosselventil ermöglicht eine schaltbare Veränderung des Durchtritts der Regenerationsleitung, so dass eine Vielzahl von Anknüpfungsmöglichkeiten für die Verfeinerung und Variation der Drucksteuerung und Regenerationssteuerung im Normalbetrieb mit elektrischen Steuersignalen gegeben ist.

Vorteilhaft weist das schaltbare Drosselventil einen durch Druckbetätigung schaltbaren Koppelungseingang auf, welcher mit dem Arbeitsanschluss des Kompressorventils verbunden ist und entgegen der Betätigung des Drosselventils durch den Steuereingang und entgegen der Rückstellkraft einer Ventilfeder -wirkt. Dadurch wird der Regenerationsbetrieb bei einer elektrisch gesteuerten Luftaufbereitungseinrichtung direkt an die Abschaltung der Druckluftzufuhr in die Druckleitung geknüpft. Wird nach einer Regeneration das Regenerationsventil wieder mit einem elektrischen Schaltsignal beaufschlagt, so heben sich die Druckkräfte der entgegen wirkenden Steuereingänge des Drosselventils auf und die Ventilfeder schaltet das Drosselventil in die zweite Schaltstellung, welche für die übrigen Betriebsmodi außerhalb des Regenerationsbetriebs vorgesehen ist.

Vorteilhaft weist das schaltbare Drosselventil zwei Schaltzustände mit unterschiedlichen Durchtrittsquerschnitten auf, so dass ein optimaler Durchtrittsquerschnitt für den Normalbetrieb der Einrichtung und Steuerung der Regeneration über das Regenerationsventil gewählt werden kann. Für die zweite Schaltstellung des Drosselventils, in die das Drosselventil fällt, wenn der mit dem Kompressorventil verbundene zweite Steuereingang nicht beaufschlagt wird, wird der für den Backup-Betrieb bei Steuerung über das Governor-Ventil optimale Durchtrittsquerschnitt vorgesehen. Zweckmäßig ist dabei der Durchtrittsquerschnitt im unbetätigten Zustand des Drosselventils, also der für die Regeneration im Backup-Betrieb vorgesehene Durchtrittsquerschnitt, kleiner als der Durchtrittsquerschnitt im betätigten Zustand für den elektrischen Steuerbetrieb. Über die Betätigung des Kompressorventils im Regenerationsbetrieb wird auch das Drosselventil betätigt und der größere Durchtrittsquerschnitt eingestellt. Im Backup-Betrieb hält das Governor-Ventil den Systemdruck im Bereich zwischen Abschaltdruck und dem Rückschaltdruck, der sich aus dem Abschaltdruck abzüglich Hystereseergibt. Durch die gleichzeitig stattfindende Regeneration entweicht in diesem Modus permanent Druckluft aus dem System. Deshalb ist ein kleinerer Querschnitt vorteilhaft, um zu schnellen Abfall des Systemdrucks zu vermeiden und somit Energie, die für das Wiederauffüllen bis zum Abschaltdruck notwendig wäre, zu sparen. Für den Normalbetrieb hat sich ein Durchtrittsquerschnitt von etwa 1,5 mm als zweckmäßig erwiesen. Für den Durchtrittsquerschnitt im Backup-Betrieb wird ein kleinerer Durchtrittsquerschnitt von etwa 0,5 mm als ausreichend gesehen.

Das schaltbare Drosselventil ist in einer weiteren vorteilhaften Ausführungsform der Erfindung alternativ zur Anordnung in der Regenerationsleitung in einer parallel zur Regenerationsleitung und in Durchströmungsrichtung hinter der Trocknungseinrichtung in die Druckleitung einmündenden Verbindungsleitung angeordnet. Die Verbindungsleitung ist mittels des Kompressorventils für die Druckluftsteuerung mit der Vorratsleitung verbindbar. Auf diese Weise steht im Regenerationsbetrieb der elektrisch gesteuerten Druckluftaufbereitungseinrichtung ein großer Durchtrittsquerschnitt für einen kräftigen Regenerationsluftstrom zur Verfügung, da trockene Druckluft aus den Systembehältern parallel durch die Regenerationsleitung und die gleichfalls durchgängige Verbindungsleitung fließen kann. Um eine fluidische Verbindung zwischen der Vorratsleitung und der Verbindungsleitung schalten zu können, ist der Arbeitsanschluss des Kompressorventils entweder mit dem Versorgungsanschluss des Drosselventils oder einem druckabhängigen Koppelungseingang des Drosselventils verbunden, wobei in der zweiten Variante der Versorgungsanschluss des Drosselventils mit der Vorratsleitung verbunden ist.

Im Backup-Betrieb bei Ausfall der elektrischen Energieversorgung der Ventile übernimmt das Governor-Ventil wie bereits beschrieben die druckabhängige Schaltung der Regeneration.

Im Backup-Betrieb ohne elektrische Steuerung strömt die Druckluft zur Regeneration durch die Regenerationsleitung unter Umgehung des Drosselventils.

Weiterer Vorteil der Anordnung des Drosselventils in einer parallelen Verbindungsleitung ist die Möglichkeit eines optimalen Abblasbetriebes ("Cold dump") mit reduziertem Durchsatz gegenüber dem elektrisch gesteuerten Regenerationsbetrieb. Dabei wird weder dem Kompressorventil für die Drucksteuerung noch dem Regenerationsventil ein elektrisches Steuersignal zugeführt, so dass das Governor-Ventil unter dem Druck der Vorratsleitung den Strömungsweg durch die Entlüftungsleitung freigibt. Der Abblasbetrieb wird insbesondere bei kalten Umgebungstemperaturen von der elektrischen Steuereinheit zwischenzeitlich eingestellt, um einer Vereisung der Druckleitung und der darin angeordneten Aggregate sowie dem Entlüftungsventil mittels warmer Luft vom Kompressor entgegen zu wirken. Im Abblasbetrieb erfolgt der Rückstrom nur über die Regenerationsleitung. Es stellt sich daher ein geringerer Massenstrom durch den Trockner ein, so dass die Durchströmung der Trocknungseinrichtung in umgekehrter Richtung begrenzt wird.

Durch die Anbindung der Schaltung des Drosselventils an die Schaltstellung des Kompressorventils wird die Regeneration im Normalbetrieb bei elektrischer Steuerung direkt an die Abschaltung der Druckluftzufuhr durch den Kompressor gekoppelt. Bei einer Wiederaufnahme der Druckluftzufuhr durch Umschalten des Kompressorventils wird durch das gleiche Ventilglied, nämlich das des Kompressorventils, ohne jeglichen Verzug der Strömungsweg in umgekehrter Richtung gesperrt.

Ein direkter Durchfluss der Regenerationsluft zum Trockner ohne Durchströmung anderer Ventile als dem Drosselventil ist gemäß einer weiteren Ausführungsform der Erfindung gegeben, wenn der Versorgungsanschluss des Drosselventils in der Verbindungsleitung mit der Vorratsleitung verbunden ist. Ein zweiter Steuereingang des Drosselventils, welcher dem ersten, mit dem Regenerationsventil verbundenen, Steuereingang entgegen wirkt, ist dabei mit dem Arbeitsanschluss des Kompressorventils verbunden. Bei durchgängiger Stellung des Kompressorventils wirkt demnach der Druck am Versorgungsanschluss des Kompressorventils, also der Systemdruck, auf den Koppelungseingang des Drosselventils. Bei durchgängiger Stellung des Drosselventils strömt Druckluft direkt aus der Vorratsleitung zum Drosselventil und anschließend durch die Verbindungsleitung in die Druckleitung, so dass die elektrisch betätigbaren Magnetventile nicht durchströmt und weniger belastet werden.

Vorteilhaft an der Versorgung der Verbindungsleitung direkt aus der Vorratsleitung ist auch, dass der Arbeitsanschluss des Kompressorventils nur zur Signalübertragung dient und daher das Zufuhrsteuerelement des Kompressors sicherer geschaltet werden kann. Auch kann das Kompressorventil baulich kleiner dimensioniert und dadurch Kosten eingespart werden.

Das Drosselelement in der Regenerationsleitung kann eine Blende mit einem kleineren Durchtrittsquerschnitt als der Querschnitt des Drosselventils sein, so dass im Abblasbetrieb der gewünschte reduzierte Luftstrom in entgegen gesetzter Durchströmungsrichtung entsteht, welcher im Backup-Betrieb noch für eine Regeneration ausreicht.

Vorteilhaft kann ein schaltbares Drosselventil in der Verbindungsleitung mit zwei Schaltzustände mit unterschiedlichen Durchtrittsquerschnitten ausgebildet sein, wodurch die Entspannung der trockenen Druckluft aus den Systembehältern bei dem auf Governor-Umschaltdruck reduzierten Druckniveau im Backup-Betrieb durch Einstellung eines optimierten Durchtrittsquerschnitt gefördert wird. Weitere Ausführungsformen der Erfindung ergeben sich aus den Unteransprüchen und den Ausführungsbeispielen, die nachstehend anhand der Zeichnung näher erläutert sind. Es zeigen:
- Fig.1: eine fluidtechnisches Schaltbild einer Druckluftaufbereitungseinrichtung nach einem ersten Ausführungsbeispiel,
- Fig.2: eine fluidtechnisches Schaltbild einer Druckluftaufbereitungseinrichtung nach einem zweiten Ausführungsbeispiel,
- Fig.3: eine fluidtechnisches Schaltbild einer Druckluftaufbereitungseinrichtung nach einem dritten Ausführungsbeispiel,
- Fig.4: eine fluidtechnisches Schaltbild einer Druckluftaufbereitungseinrichtung nach einem vierten Ausführungsbeispiel,
- Fig.5: eine fluidtechnisches Schaltbild einer Druckluftaufbereitungseinrichtung nach einem fünften Ausführungsbeispiel.

Für jeweils gleiche Bauteile sind in den Zeichnungsfiguren die jeweils gleichen Bezugszeichen verwendet.

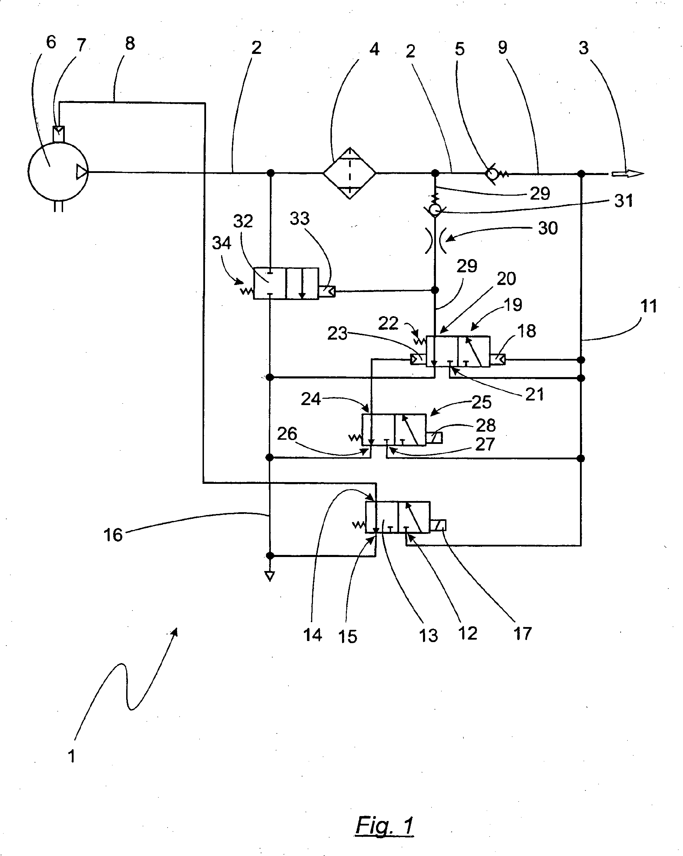

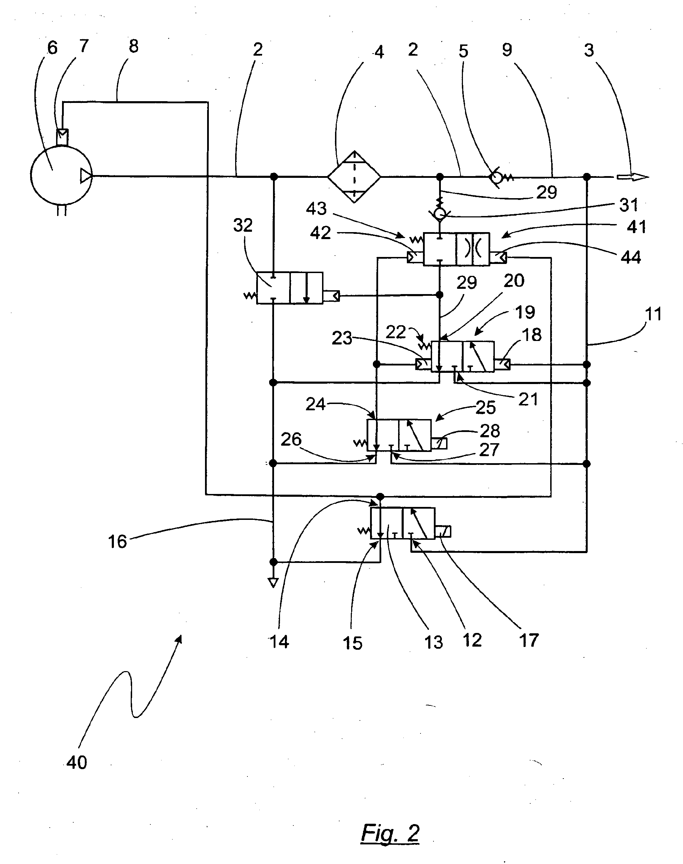

Fig. 1 zeigt eine elektrisch gesteuerte Druckluftaufbereitungseinrichtung 1 mit einer Druckleitung 2, in der ebenso wie bei den Druckluftaufbereitungseinrichtungen nach den Fig.2, 3, 4, 5 in Durchströmungsrichtung 3 hintereinander eine Trocknungseinrichtung 4 und ein Rückschlagventil 5 angeordnet sind. An das Rückschlagventil 5 ist ein hier nicht dargestelltes Sicherheitsventil oder Mehrkreisschutzventil angeschlossen, an die einzelne Druckmittelkreise wie z.B. die Druckmittelkreise einer Druckluftbremsanlage eines Kraftfahrzeuges anschließbar sind. Diese Druckmittelkreise sind in den Zeichnungsfiguren nicht dargestellt.

Im Folgenden wird der gemeinsame Aufbau sämtlicher Ausführungsbeispiele am Beispiel von Fig. 1 beschrieben. Auf Besonderheiten einzelner Ausführungsbeispiele ist an der jeweiligen Stelle der Figurenbeschreibung hingewiesen.

Die Druckluftzufuhr erfolgt in allen Ausführungsbeispielen über einen Kompressor 6. Ein druckbetätigbarer Steuerschalter 7 des Kompressors 6 bildet ein Zufuhrsteuerelement der Druckluftaufbereitungseinrichtung, so dass die Druckluftzufuhr in die Druckleitung 2 direkt geschaltet wird. Alternativ kann als dem Kompressor 6 zugeordnetes druckbetätigbares Zufuhrsteuerelement ein druckbetätigbarer Steuerauslass des Kompressors vorgesehen sein, der bei Betätigung den Kompressorstrom ableitet oder aber ein separates 3/2-Wege-Ventil in der Druckleitung. Der Kompressor 6 saugt Luft aus der Atmosphäre an und gibt einen Druckluftstrom in die Druckleitung 2 ab. Der Steuerschalter 7 ist über eine Kompressorsteuerleitung 8 durch Druckluft betätigbar. Sobald am Steuerschalter 7 über die Kompressorsteuerleitung 8 der Steuerdruck anliegt, wird die Drucklufteinspeisung unterbunden.

Hinter dem Rückschlagventil 5 schließt sich an die Druckleitung 2 eine Systemdruckleitung 9 an, in der der für die Vorratsbehälter vorgesehene Systemdruck herrscht. Um den Steuerdruck an den Steuerschalter 7 anzulegen ist die Kompressorsteuerleitung 8 fluidisch mit einer Vorratsleitung 11 verbindbar, welche hinter dem Rückschlagventil 5 aus der Systemdruckleitung 9 abzweigt. Das Rückschlagventil 5 koppelt die vom Kompressor kommende Druckleitung 2 von den Vorratsbehältern (in der Darstellung nicht dargestellt) ab, so dass in der Vorratsleitung 11 das Systemdruckniveau aus den Vorratsbehältern erhalten bleibt, auch wenn die Druckleitung 2 in Strömungsrichtung 3 vor dem Rückschlagventil 5 während der Regeneration drucklos ist.

Die Vorratsleitung 11 ist an den Versorgungsanschluss 12 eines elektrisch betätigbaren Kompressorventils 13 angeschlossen. Bei dem Kompressorventil 13 handelt es sich um ein zweites Magnetventil, welches zusätzlich zu einem elektrisch betätigbaren Regenerationsventil angeordnet ist, welches die Regeneration der Trocknungseinrichtung steuert und unten noch näher beschrieben ist. Zur Steuerung der Druckluftzufuhr ist an einen Arbeitsanschluss 14 des Kompressorventils 13 das Zufuhrsteuerelement angeschlossen, also in den gezeigten Ausführungsbeispielen der Steuerschalter 7 über die Kompressorsteuerleitung 8. Das Kompressorventil 13 ist in allen Ausführungsbeispielen als 3/2-Wege-Ventil ausgebildet, wobei der Arbeitsanschluss 14 entweder in einer ersten Schaltstellung des Kompressorventils 13 mit dem Versorgungsanschluss 12, das heißt mit der Vorratsleitung 11, oder in einer zweiten Schaltstellung mit einem dritten Anschluss, nämlich einem Entlüftungsanschluss15, verbunden ist. An den Entlüftungsanschluss 15 ist eine Entlüftungsleitung 16 angeschlossen. Die Entlüftungsleitung 16 dient in den Ausführungsbeispielen der Entlüftung weiterer, noch zu beschreibender Ventile der jeweiligen Druckluftaufbereitungseinrichtungen. Alternativ kann auch für jedes Ventil eine separate Entlüftung vorgesehen sein.

Ein elektrisch betätigbarer Steuereingang 17 des Kompressorventils 13 ist über eine elektrische Leitung mit einem nicht dargestellten elektronischen Steuergerät verbunden. Dem Steuergerät werden durch geeignete Drucksensoren laufend ermittelte Informationen über den Systemdruck in dem in Durchströmungsrichtung 3 hinter dem Rückschlagventil 5 liegenden Abschnitt der Druckleitung 2 (also in oder hinter der Systemdruckleitung 9) eingegeben. Der Systemdruck wird, beispielsweise am Abzweig der Vorratsleitung 11 oder in der Vorratsleitung 11 erfasst. In Abhängigkeit von diesen Informationen und ggf. weiterer Eingangssignale erzeugt das Steuergerät elektrische Steuersignale zur Steuerung des Kompressorventils 13.

Mit der Vorratsleitung 11 ist außerdem ein erster Steuereingang 18 eines druckbetätigbaren Governor-Ventils 19 verbunden. Das Governor-Ventil 19 ist als 3/2-Wege-Ventil ausgestaltet, wobei es mit einem Arbeitsanschluss 20 in nachfolgend beschriebener Weise an die Druckleitung 2 und ein Zufuhrsteuerelement für die Druckluftzufuhr angeschlossen ist. An einen Versorgungsanschluss 21 des Governor-Ventils 19 ist die Vorratsleitung 11 angeschlossen. Ein Entlüftungsanschluss des Governor-Ventils 19 ist mit der Entlüftungsleitung 16 verbunden. Der erste Steuereingang 18 des Governor-Ventils, welcher an die Vorratsleitung 11 angeschlossen ist, wirkt gegen die permanente Rückstellkraft einer Ventilfeder 22. Das Governor-Ventil 19 weist einen zweiten druckbetätigbaren Steuereingang 23 auf, welcher gemeinsam mit der Ventilfeder 22 gegen den ersten Steuereingang 18 arbeitet.

An den zweiten Steuereingang 23 des Governor-Ventils 19 ist ein Arbeitsanschluss 24 eines elektrisch betätigbaren Regenerationsventils 25 angeschlossen. Das Regenerationsventil 25 ist ein Magnetventil, welches zur Steuerung der Regeneration der Trocknungseinrichtung 4 vorgesehen ist. Durch die Anbindung des Arbeitsanschluss 24 an den zweiten Steuereingang 23 des Governor-Ventils 19 ist eine Vorsteuerung des druckgesteuerten Governor-Ventils 19 durch das elektrisch betätigbare Regenerationsventil 25 gegeben. Das Regenerationsventil 25 ist als 3/2-Wege-Ventil ausgebildet, wobei der Arbeitsanschluss 24 alternativ mit einem an die Entlüftungsleitung 16 angeschlossenen Entlüftungsanschluss 26 oder einem an die Vorratsleitung 11 angeschlossenen Versorgungsanschluss 27 verbunden ist. Ein elektrisch betätigbarer Steuereingang 28 des Regenerationsventils 25 ist über eine nicht dargestellte elektrische Leitung mit der elektronischen Steuereinheit verbunden. Die Steuereinheit schaltet nach vorgegebenen Werten und unter Berücksichtigung laufend gemessener Betriebsparameter sowohl das Regenerationsventil 25 als auch das Kompressorventil 13 zur Steuerung der Druckluftzufuhr.

In Durchströmungsrichtung 3 der Druckleitung 2 vor der Trocknungseinrichtung 4 zweigt die Entlüftungsleitung 16 aus der Druckleitung 2 ab. In Durchströmungsrichtung 3 hinter der Trocknungseinrichtung 4 mündet eine Regenerationsleitung 29 in die Druckleitung 2, welche an den Arbeitsanschluss 20 des Governor-Ventils 19 angeschlossen ist. In der Regenerationsleitung 29 sind ein Drosselelement und ein Rückschlagventil 31 angeordnet, welches eine Rückströmung von der Druckleitung 2 in Richtung des Governor-Ventils 19 verhindert. In den Ausführungsbeispielen der Fig.1, Fig. 4 und Fig. 5 ist das Drosselelement als Blende 30 ausgebildet. als Das Rückschlagventil 31 ist in den gezeigten Ausführungsbeispielen in Richtung der vorgesehenen Durchströmung hinter der Blende 30 angeordnet. Alternativ können - sofern diese Anordnung bspw. nach konstruktiven Rahmenbedingungen vorteilhaft ist - das Rückschlagventil 31 und die Blende 30 in umgekehrter Reihenfolge als dargestellt angeordnet sein.

In der Entlüftungsleitung 16 ist zwischen der Druckleitung 2 und der Anknüpfung des Regenerationsventils 25, des Kompressorventils 13 und des Governor-Ventils 19 ein Entlüftungsventil 32 angeordnet. Das Entlüftungsventil 32 ist ein 2/2-Wege-Ventil, dessen druckabhängiger Steuereingang 33 mit der Regenerationsleitung 29 und damit ebenfalls mit dem Arbeitsanschluss 20 des Governor-Ventils 19 fluidisch verbunden ist. In der gezeigten ersten Schaltstellung sperrt das Entlüftungsventil 32 die Entlüftungsleitung 16 ab. Der druckabhängige Steuereingang 33 bringt das Entlüftungsventil 32 gegen die Rückstellkraft einer Ventilfeder 34 bei Anliegen des Steuerdrucks in der Regenerationsleitung 29 in die durchgängige Stellung.

Die Entlüftungsleitung 16 ist mit einer symbolisiert dargestellten Entlüftungseinrichtung 35 verbunden, welche die aus den Entlüftungsanschlüssen der angeschlossenen Ventile entweichende Abluft und die Regenerationsluft aus der Druckleitung aufnimmt.

Als Governor-Umschaltdruck wird im weiteren der minimale Druck bezeichnet, der am Steuereingang 18 (gespeist aus der Vorratsleitung 11) anliegen muss, um das Governor-Ventil 19 bei drucklosem Steuereingang 23 gegen die Federkraft 22 in die zweite Schaltstellung zu bringen, die den Versorgungsanschluss 21 mit dem Arbeitsanschluss 20 fluidisch verbindet und somit die Vorratsleitung 11 zur Regenerationsleitung 29 durchschaltet.

Als Governor-Rückschaltdruck wird im weiteren das Druckniveau (kleiner als der Governor-Umschaltdruck) bezeichnet, bei dessen Erreichen der Governor bei weiterhin drucklosem Steuereingang 23 aus der zweiten Schaltstellung zurückschaltet in die erste Schaltstellung. Die Druckdifferenz zwischen diesen beiden Drücken wird im Weiteren als Hysterese des Governors bezeichnet.

Die Druckluftaufbereitungseinrichtung funktioniert wie folgt:
Die elektronische Steuereinheit kann durch verschiedene Kombinationen der Schaltstellungen des Kompressorventils 13 und des Regenerationsventils 25 unterschiedliche Betriebsmodi der elektronisch steuerbaren Druckluftaufbereitungseinrichtung einstellen. Dabei wird das Governor-Ventil 19 über seinen Steuereingang 23 von dem Regenerationsventil 25 oberhalb eines Governor-Umschaltdrucks vorgesteuert. Entsprechend muss das Governor-Ventil 19 bei betätigtem Regenerationsventil 25 in der ersten Schaltstellung bleiben, in der die Regenerationsleitung 29 in ihrem an den Arbeitsanschluss 20 angeschlossenen Abschnitt, der bis zum Rückschlagventil 31 reicht, entlüftet ist. Die Betätigung des Regenerationsventils 25, also die Zuführung eines elektrischen Schaltsignals, bringt das Regenerationsventil 25 in die zweite Schaltstellung, in welcher sein Arbeitsanschluss 24 mit dem Versorgungsanschluss 27 verbunden ist und daher eine fluidische Verbindung zwischen der Vorratsleitung 11 und dem Steuereingang 23 des Governor-Ventil 19 geschaffen wird. In dieser Schaltstellung liegt der Arbeitsdruck der Druckleitung 2, der in Strömungsrichtung hinter dem Rückschlagventil 5 herrscht, über die Vorratsleitung 11 an beiden druckabhängigen Steuereingängen 18, 23 des Governor-Ventils 19 an. Die entgegenwirkenden Ventilkräfte der beiden Steuereingänge 18, 23 heben sich gegenseitig auf, so dass die Ventilfeder 22 das Governor-Ventil 19 in der gezeigten Ventilstellung hält, bei der die Regenerationsleitung 29 in ihrem an den Arbeitsanschluss 20 angeschlossenen Abschnitt, der bis zum Rückschlagventil 31 reicht, mit der Entlüftungsleitung 16 verbunden ist. Somit bleibt das Entlüftungsventil 32 geschlossen, und eine Regeneration ist unterbunden.

In einem Pump-Modus wird dem Regenerationsventil 25 das elektrische Schaltsignal zugeführt, so dass das Governor-Ventil 19 die Verbindung der Vorratsleitung 11 zur Regenerationsleitung 29 sperrt. Gleichzeitig wird in dieser Betriebsart dem Kompressorventil 13 für die Steuerung der Druckluftzufuhr kein Steuersignal zugeführt, so dass es in der gezeigten Schaltstellung die Kompressorsteuerleitung 8 entlüftet. Der Druckluftstrom des Kompressors 6 wird somit in die Druckleitung 2 eingespeist.

In einem Leerlaufmodus führt die Steuereinheit dem Steuereingang 17 des Kompressorventils 13 ein Steuersignal zu, wodurch das Kompressorventil 13 in die zweite Schaltstellung gebracht wird. Dabei wird der Arbeitsanschluss 14 des Kompressorventils 13 mit dem an die Vorratsleitung 11 angeschlossenen Versorgungsanschluss 12 verbunden. In dieser zweiten Schaltstellung wird der Steuerdruck in der Vorratsleitung 11 zum Steuerschalter 7 des Kompressors 6 durchgeschaltet und die Druckluftzufuhr in die Druckleitung 2 getrennt.

In einem Regenerationsmodus leitet die Steuereinheit allein dem Kompressorventil 13 ein elektrisches Betätigungssignal zu, so dass über die zweite Schaltstellung des Steuerschalters 7 des Kompressors 6 die Druckluftzufuhr zur Druckleitung 2 gesperrt ist. Das Betätigungssignal des Regenerationsventils 25 wird im Regenerationsmodus unterbrochen, so dass das Regenerationsventil 25 in die dargestellte erste Schaltstellung fällt, in welcher der zweite Steuereingang 23 des Governor-Ventils 19 mit der Entlüftungsleitung 16 verbunden und daher unbetätigt ist. In dieser Schaltstellung wirkt am Governor-Ventil 19 der Druck in der Vorratsleitung 11 nur noch über den ersten Steuereingang 18. Im Normalbetrieb der elektrischen Druckluftaufbereitungseinrichtung ist der eingesteuerte Arbeitsdruck höher als der Governor-Umschaltdruck, bei dem die Ventilfeder 22 das Governor-Ventil 19 in der ersten Schaltstellung hält. Der Arbeitsdruck überwindet die Rückstellkraft der Ventilfeder und bringt das Governor-Ventil 19 in die zweite Schaltstellung, in welcher das Governor-Ventil 19 zwischen der Vorratsleitung 11 und der Regenerationsleitung 29 durchgängig ist.

Aufgrund des Durchgangs von der Vorratsleitung 11 zur Regenerationsleitung 29 wird auch das Entlüftungsventil 32 in der Entlüftungsleitung 16 auf durchgängig geschaltet, so dass eine Durchströmung der Trocknungseinrichtung 4 entgegen der üblichen Durchströmungsrichtung 3 der Druckleitung 2 (im Bereich der Druckleitung 2 zwischen dem Abzweig der Regenerationsleitung 29 bis zum Abzweig der Entlüftungsleitung 16) möglich ist. Durch die entgegengesetzte Durchströmung der Druckleitung 2 mit trockener Druckluft aus den Systemsbehältern des Kraftfahrzeugs wird die Trocknungseinrichtung 4 bzw. das in ihr enthaltene Adsorptionsmittel regeneriert. Vor dem Einströmen der Regenerationsluft in die Druckleitung 2 wird die zurückströmende Druckluft durch die Blende 30 auf Atmosphärendruck entspannt, bevor es die Trocknungseinrichtung 4 zur Regeneration durchströmt. Die gespeicherte Feuchtigkeit aus der Trocknungseinrichtung 4 wird mit dem Luftstrom über die im Regenerationsmodus durchgängige Entlüftungsleitung 16 in die Atmosphäre abgeführt.

Sollte während der Fahrt eines Kraftfahrzeugs die elektrische Energie der Steuereinheit ausfallen, so übernimmt das Governor-Ventil 19 in einem Backup-Modus sowohl die Steuerung des Systemsdrucks als auch der Regeneration der Trocknungseinrichtung 4. Ohne elektrisches Steuersignal ist weder am Kompressorventil 13 noch am Regenerationsventil 25 ein Durchgang zur Vorratsleitung 11 geschaffen. Sobald das Governor-Ventil 19 umschaltet und die Regenerationsleitung 29 freigibt, wird gleichzeitig das Entlüftungsventil 32 vom anliegenden Steuerdruck in die durchgängige Schaltstellung gebracht und die Entlüftungsleitung 16 frei gegeben. Der Druckluftstrom des Kompressors 6 wird über die Entlüftungsleitung 16 abgeleitet und somit die Zufuhr zur Trocknungseinrichtung 4 unterbunden. Das Governor-Ventil 19 übernimmt somit die Steuerung der Druckluftzufuhr und setzt das Entlüftungsventil 32 als Zufuhrsteuerelement ein.

Auch bei Inaktivität der elektrisch steuerbaren Magnetventile, nämlich dem Kompressorventil 13 und dem Regenerationsventil 25, ist somit eine Umschaltung der Druckluftzufuhr durch das Governor-Ventil 19 gewährleistet. Eine Umschaltung des Governor-Ventils 19 erfolgt genau dann, wenn der Druck in der Vorratsleitung unter einen Rückschaltdruck (Abschaltdruck abzüglich Hysterese) fällt, bei dem der Steuereingang 18 nicht mehr die Rückstellkraft der Ventilfeder 22 überwinden kann. Das Governor-Ventil 19 hält somit bei Ausfall der elektrischen Steuerenergie den Arbeitsdruck im Bereich des durch die Ventilfeder 22 bestimmten Druckbands zwischen Governor-Umschaltdruck und Rückschaltdruck.

Unterhalb des Governor-Umschaltdrucks hält die Ventilfeder 22 das Governor-Ventil 19 in der dargestellten Stellung, wodurch auch das vom Governor-Ventil 19 gesteuerte Entlüftungsventil 32 die Entlüftungsleitung 16 sperrt und der Druckluftstrom des Kompressors 6 zur Trocknungseinrichtung 4 geleitet wird. Sobald der Arbeitsdruck in den Systembehältern den Governor-Umschaltdruck übersteigt, verbindet das Governor-Ventil 19 die Vorratsleitung 11 mit dem Entlüftungsventil 32 und leitet den Druckluftstrom des Kompressors 6 über die Entlüftungsleitung 16 ab. Gleichzeitig ist in dieser Stellung des Governor-Ventils 19 die Regenerationsleitung 29 durchgängig, so dass Druckluft aus den Systembehältern zwecks Regeneration zur Trocknungseinrichtung rückströmen kann. Auf diese Weise wird jedes Mal, wenn der Systemdruck den Governor-Umschaltdruck übersteigt, in einer eine Regeneration der Trocknungseinrichtung 4 durchgeführt, so dass eine nahezu unbegrenzte Weiterfahrt des Kraftfahrzeugs möglich ist. Die Druckluftaufbereitungseinrichtung 1 stellt somit eine Limp Home-Funktion zur Verfügung.

Die Funktion des Governor-Ventils, bei Erreichen des Governor-Umschaltdruck die Steuerung von Druck und Regeneration zu übernehmen, wird in einem Abblasbetrieb ("Cold dump") genutzt. Dabei leitet die elektrische Steuereinheit vorübergehend weder dem Kompressorventil 13 noch dem Regenerationsventil 25 ein Steuersignal zu. Dadurch wird die Druckluftzufuhr über das Entlüftungsventil geregelt, während der Kompressor 6 weiter heisse Luft durch den vorderen Teil der Druckleitung 2 fördert. Dadurch wird einem Einfrieren der durchströmten Einrichtungen, insbesondere der Druckleitung 2 und dem Entlüftungsventil 32, entgegengewirkt. Dies geschieht bis der Governor-Rückschaltdruck (Umschaltdruck abzüglich Hysterese) erreicht ist und das Governor-Ventil 19 zurückschaltet oder die elektronische Steuerung den Abblasbetreib durch Schalten der elektrisch betätigbaren Magnetventile beendet. Wird beispielsweise das Regenerationsventil 25 angesteuert, so geht die Druckluftaufbereitungseinrichtung in den Pump-Modus über. Das bestromte Regenerationsventil 25 unterbindet über das vorgesteuerte Governor-Ventil 19 das Betätigungssignal am Entlüftungsventil 32, wodurch die Entlüftungsleitung 16 gesperrt wird und der Druckluftstrom des Kompressors 6 wieder durch die Trocknungseinrichtung 4 geleitet wird.

Das Regenerationsventil 25 ist als Magnetventil mit einem kleinen Öffnungsdurchmesser, (beispielsweise 1 mm) ausgeführt, was für die Aufgabe der pneumatischen Betätigung des Governor-Ventils 19 ausreichend ist. Das Kompressorventil 13 hat einen größeren Öffnungsdurchmesser, beispielsweise von 1,6 mm, um eine sichere Schaltung des druckbetätigbaren Steuerschalters 7 des Kompressors zu gewährleisten. Das Governor-Ventil 19 ist mit einem großen Öffnungsdurchmesser von beispielsweise 2 mm ausgestattet, um einen hinreichenden Durchfluss des Regenerationsluftstroms und hinreichenden Staudruck in der Regenerationsleitung 29 vor dem Drosselelement zu gewährleisten, um das Entlüftungsventil 32 sicher zu schließen.

Fig. 2 zeigt als zweites Ausführungsbeispiel einer Druckluftaufbereitungseinrichtung eine Druckluftaufbereitungseinrichtung 40, bei der in der Regenerationsleitung.29 anstelle der Blende 30 der Druckluftaufbereitungseinrichtung 1 in Fig. 1 ein durch Druckbetätigung schaltbares Drosselventil 41 als Drosselelement angeordnet ist.

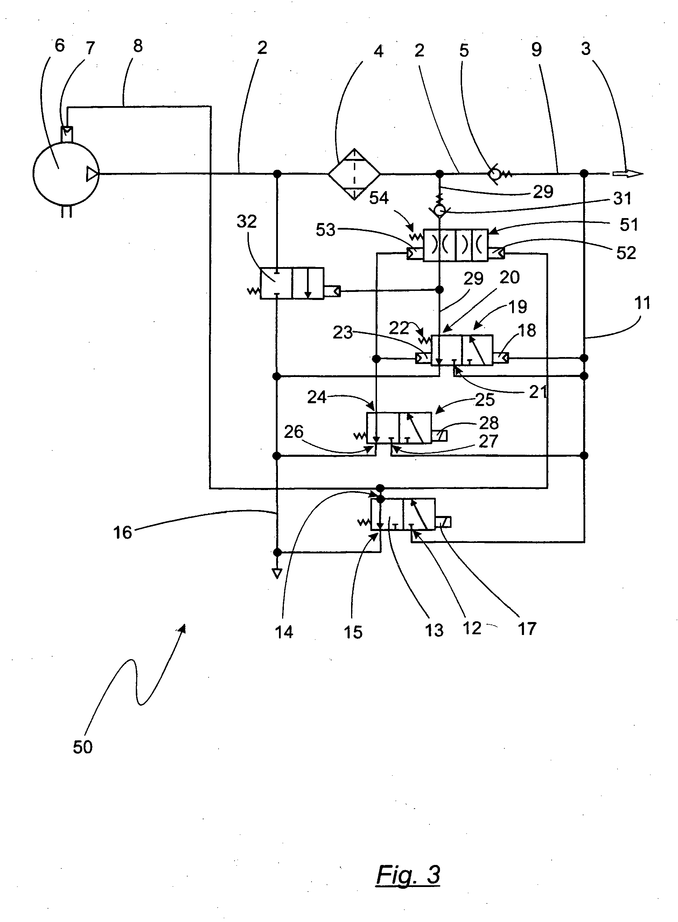

Das schaltbare Drosselventil 41 kann wie auch die Drosselventile nach den Ausführungsbeispielen nach Fig. 3, 4, 5 vor oder hinter dem Rückschlagventil 31 angeordnet sein.

Das Drosselventil 41 ist als 2/2-Wege-Ventil gestaltet, wobei ein Steuereingang 42 mit dem Arbeitsanschluss 24 des Regenerationsventils 25 verbunden ist. Eine Ventilfeder 43 wirkt mit ihrer permanenten Rückstellkraft entgegen einem druckbetätigbaren Koppelungseingang 44 des Drosselventils 41. Der Koppelungseingang 44 ist ein zweiter, durch Druckmittel betätigbarer, Steuereingang des Drosselventils, welcher mit dem Arbeitsanschluss 14 des Kompressorventils 13 verbunden ist. Bei durchgängiger Stellung des Kompressorventils 13 liegt daher am Koppelungseingang 44 der Systemdruck aus der Vorratsleitung 11 an. Im Übrigen entspricht die Druckluftaufbereitungseinrichtung 40 dem zu Fig. 1 beschriebenen Aufbau.

Im Pumpbetrieb wird dem Regenerationsventil 25 sein elektrisches Steuersignal zugeführt, so dass am Governor-Ventil 19 die Verbindung zwischen der Vorratsleitung 11 und dem Entlüftungsventil 32 unterbrochen ist und die Entlüftungsleitung 16 gesperrt ist.

Im Regenerationsbetrieb wird wie bereits zu Fig. 1 beschrieben das Kompressorventil 13 betätigt, wodurch der Steuerschalter 7 des Kompressors 6 betätigt wird und die Einspeisung von Druckluft in die Druckleitung 2 unterbunden wird. Gleichzeitig wird die Zuführung des Steuersignals für das Regenerationsventil 25 unterbrochen, so dass das Regenerationsventil 25 in die gezeigte erste Schaltstellung gelangt. Dabei wird der Steuereingang 42 des Drosselventils 41 mit der Entlüftungsleitung 16 verbunden und die Schaltkraft des Steuereingangs 42 aufgehoben. Gleichzeitig führt die Betätigung des Kompressorventils 13 zu einer Durchschaltung des Steuerdrucks der Vorratsleitung 11 zum Koppelungseingang 44 des Drosselventils 41. Der Koppelungseingang 44 entfaltet unter dem anliegenden Steuerdruck der Vorratsleitung 11 eine Kraft, welche die Ventilfeder 43 überwindet und das Drosselventil 41 in die durchgängige Stellung schaltet.

Die Druckluftaufbereitungseinrichtung 40 bestimmt oberhalb eines durch die Ventilfeder 22 des Governor-Ventils 19 festliegenden Governor-Umschaltdrucks den Arbeitsdruck am Ausgang der Druckleitung durch Einstellung des Kompressorventils 13 und des Regenerationsventils 25. Bei Ausfall der elektrischen Steuerenergie fällt die Druckluftaufbereitungseinrichtung 40 in einen Backupmodus, wobei das Governor-Ventil 19 in der bereits zu Fig. 1 beschriebenen Weise den Druck im Bereich zwischen Governor-Umschaltdruck und Governor-Rückschaltdruck (Umschaltdruck abzüglich Hysterese) hält.

Fig. 3 zeigt als drittes Ausführungsbeispiel einer Druckluftaufbereitungseinrichtung eine Druckluftaufbereitungseinrichtung 50, bei der in der Regenerationsleitung 29 als Drosselelement ein schaltbares Drosselventil 51 mit zwei durch Druck betätigbaren Steuereingängen und zwei unterschiedlichen Durchtrittsquerschnitten vorgesehen ist. Ein Steuereingang 52 ist dabei an den Arbeitsanschluss 24 des Regenerationsventils 25 angeschlossen. Ein druckbetätigbarer Koppelungseingang 53 ist mit dem Arbeitsanschluss 14 des Kompressorventils 13 verbunden, welches für die Steuerung der Druckluftzufuhr eingesetzt ist. Der Koppelungseingang 53 wirkt dem Steuereingang 52 und der Rückstellkraft einer Ventilfeder 54 entgegen. Im Übrigen entspricht die Druckluftaufbereitungseinrichtung 50 dem bereits zu Fig. 1 beschriebenen Aufbau.

Im Regenerationsbetrieb führt die Verknüpfung des Koppelungseingang 53 des Drosselventils 51 mit dem Arbeitsanschluss 14 des Kompressorventils 13 zu einer Durchschaltung des Steuerdrucks der Vorratsleitung 11 zum Drosselventil 51, wodurch das Drosselventil 51 seine zweite Schaltstellung mit einem größeren Durchtrittsquerschnitt (beispielsweise von 1,5 mm) einnimmt. Im Backup-Modus bei Ausfall der elektrischen Steuerenergie schaltet das Drosselventil 51 in die erste Schaltstellung, in der ein kleinerer Durchtrittsquerschnitt (beispielsweise 0,5 mm) durchgängig ist. Dadurch wird eine optimale Entspannung der trockenen Druckluft aus den Systembehältern bei dem auf Governor-Umschaltdruck reduzierten Druckniveau im Backup-Betrieb erreicht. Bei Ausfall der elektrischen Steuerenergie befinden sich sowohl das Kompressorventil 13 als auch das Regenerationsventil 25 in der gezeigten ersten Schaltstellung, wobei der jeweilige Arbeitsanschluss 14, 24 entlüftet ist. Daher liegt an beiden Steuereingängen des Drosselventils 51 kein Steuerdruck an und die Ventilfeder 54 schaltet das Drosselventil 51 in die Schaltstellung mit geringerem Durchtrittsquerschnitt.

Im Abblasbetrieb (cold dump) führt die Abschaltung der elektrischen Steuersignale sowohl des Kompressorventils 13 als auch des Regenerationsventils 25 bei der Druckluftaufbereitungseinrichtung 50 dazu, dass sich ein Regenerationsfluss durch den kleineren Durchtrittsquerschnitt des Drosselventils 51 einstellt.

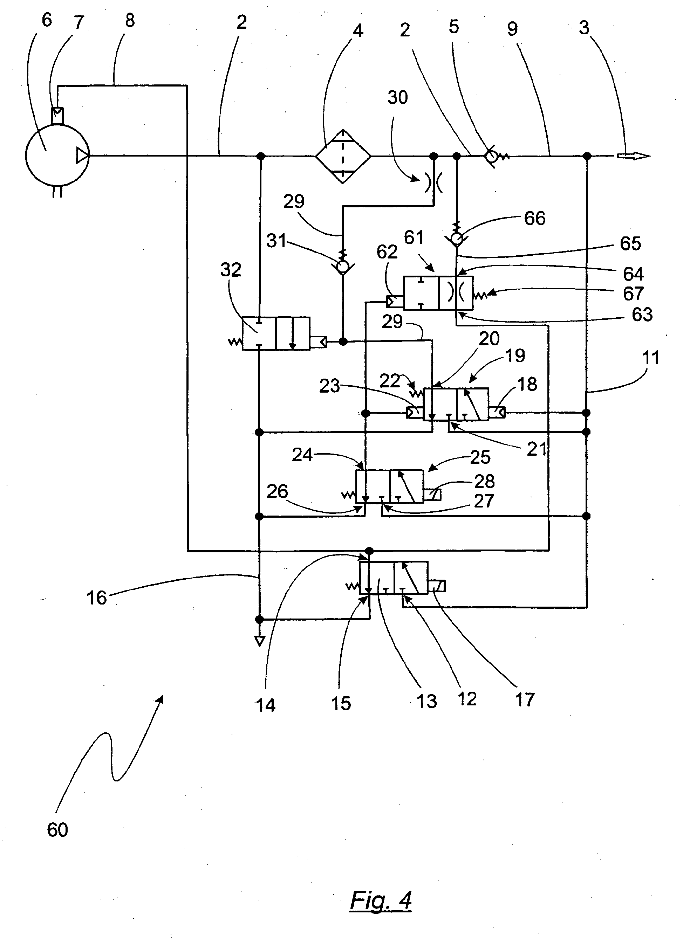

Fig. 4 zeigt als viertes Ausführungsbeispiel einer Druckluftaufbereitungseinrichtung eine Druckluftlaufbereitungseinrichtung 60, bei der ein als 2/2-Wege-Ventil ausgestaltetes schaltbares Drosselventil 61 zur Steuerung des Regenerationsluftstroms vorgesehen ist. Das Drosselventil 61 weist im Unterschied zu den übrigen Ausführungsbeispielen einen einzigen druckbetätigbaren Steuereingang 62 auf, welcher mit dem Arbeitsanschluss 24 des Regenerationsventils 25 verbunden ist.

Im Unterschied zu den Ausführungsbeispielen der Druckluftaufbereitungseinrichtungen nach Fig. 1 bis 3 ist das schaltbare Drosselventil 61 der Druckluftlaufbereitungseinrichtung 60 nicht in der Regenerationsleitung 29 angeordnet. Ein Versorgungsanschluss 63 des Drosselventils 61 ist an den Arbeitsanschluss 14 des zweiten Magnetventils 13 für die Steuerung der Druckluftzufuhr angeschlossen und ein Arbeitsanschluss 64 des Drosselventils 61 über eine Verbindungsleitung 65 mit der Druckleitung 2 verbunden. Die Verbindungsleitung 65, in der ein Rückschlagventil 66 angeordnet ist, mündet parallel zur Regenerationsleitung 29 zwischen Trocknungseinheit 4 und Rückschlagventil 5 in die Druckleitung 2. Die Regenerationsleitung 29 ist mit einem darin angeordneten Rückschlagventil 31 und einer Blende 30 in der zu Fig.1 beschriebenen Weise an den Arbeitsanschluss 20 des Governor-Ventils 19 angeschlossen.

Das Drosselventil 61 beherrscht somit die Verbindungsleitung 65 und damit einen zweiten Strömungsweg für Regenerationsluft.

Die Blende 30 in der Regenerationsleitung 29 ist in dieser Ausgestaltung mit deutlich kleinerem Durchmesser als das schaltbare Drosselventil 61 ausgeführt, beispielsweise 0,5 mm, so dass der Durchfluss, wenn beide Drosselelemente parallel geöffnet sind, wieder in Summe eine optimale Regeneration ermöglicht.

Der Durchfluss durch das Kompressorventil 13 ist in der Ausgestaltung nach Fig. 4 deutlich größer als in den Ausführungsbeispielen nach Fig. 1, Fig. 2 und Fig. 3, und stellt eine sichere Steuerung des Kompressors 6 bei gleichzeitigem Abfluss von Druckluft durch das Drosselventil 61 sicher.

Der Steuereingang 62 des Drosselventils 61, der mit dem Regenerationsventil 25 verbunden ist, wirkt entgegen der permanenten Rückstellkraft einer Ventilfeder 67, welche das Drosselventil 61 im nicht betätigten Zustand in der durchgängigen Schaltstellung hält.

Im Übrigen entspricht die Druckluftaufbereitungseinrichtung 60 dem bereits zu Fig. 1 beschriebenen Aufbau.

Wird das Regenerationsventil 25 von der elektrischen Steuereinheit mit dem Steuersignal versorgt, so wirkt der Druck der Vorratsleitung 11 auf den Steuereingang 62 und schaltet das Drosselventil 61 in die nicht durchgängige zweite Schaltstellung.

Im Regenerationsbetrieb der Druckluftaufbereitungseinrichtung 60 verbindet das Regenerationsventil 25 in der bereits beschriebenen Weise die Entlüftungsleitung 16 mit dem zweiten Steuereingang 23 des Governor-Ventils 19, so dass das Governor-Ventil 19 seinerseits die den Steuerdruck der Vorratsleitung 11 mit seinem Arbeitsanschluss 20 verbindet, das Entlüftungsventil 32 umschaltet und die Entlüftungsleitung 16 frei gibt. Das Drosselventil 61 befindet sich, wenn das Regenerationsventil 25 nicht betätigt wird, in der ersten Schaltstellung, in der es durchgängig ist. Über den Durchtrittsquerschnitt ist somit das Drosselventil 61 für eine Verbindung vom Kompressorventil 13 zur Druckleitung 2 durchgängig. Außerdem ist das Kompressorventil 13 mit einem elektrischen Steuersignal versorgt und somit die Vorratsleitung 11 mit dem Versorgungsanschluss 63 des Drosselventils 61 fluidisch verbunden. Die Regenerationsluft strömt dann direkt über das Kompressorventil 13 zum Drosselventil 61 unter Umgehung des Governor-Ventils 19 und gelangt schließlich durch die Verbindungsleitung 65 in die Druckleitung 2, um die Trocknungseinrichtung 4 rückwärts zu durchströmen. Auf diese Weise kann Regenerationsluft sowohl durch die Regenerationsleitung 29 als auch durch die Verbindungsleitung 65 zur Trocknungseinrichtung 4 geleitet werden.

Im Regenerationsbetrieb werden somit sowohl die Regenerationsleitung 29 als auch die Verbindungsleitung 65 als paralleler Strömungsweg für die Rückströmung in die Druckleitung 2 frei gegeben, so dass in der Summe ein großer Durchtrittsquerschnitt gegeben ist.

Im Backup-Betrieb, d.h. nach Ausfall der elektrischen Steuerenergie, schaltet das Kompressorventil 13 in die erste Schaltstellung, in der das Drosselventil 61 nicht versorgt wird. Im Backup-Betrieb wird eine Regeneration der Trocknungseinrichtung 4 durch die druckabhängige Steuerung des Governor-Ventils 19 übernommen. In der bereits zu Fig. 1 beschriebenen Weise gibt das Governor-Ventil 19 bei Überschreiten des Governor-Umschaltdrucks im Backup-Betrieb eine Verbindung von der Vorratsleitung 11 zur Druckleitung 2 frei. Gleichzeitig wird die Druckluftzufuhr vom Kompressor 6 durch Öffnen des Entlüftungsventils 32 unterbunden.

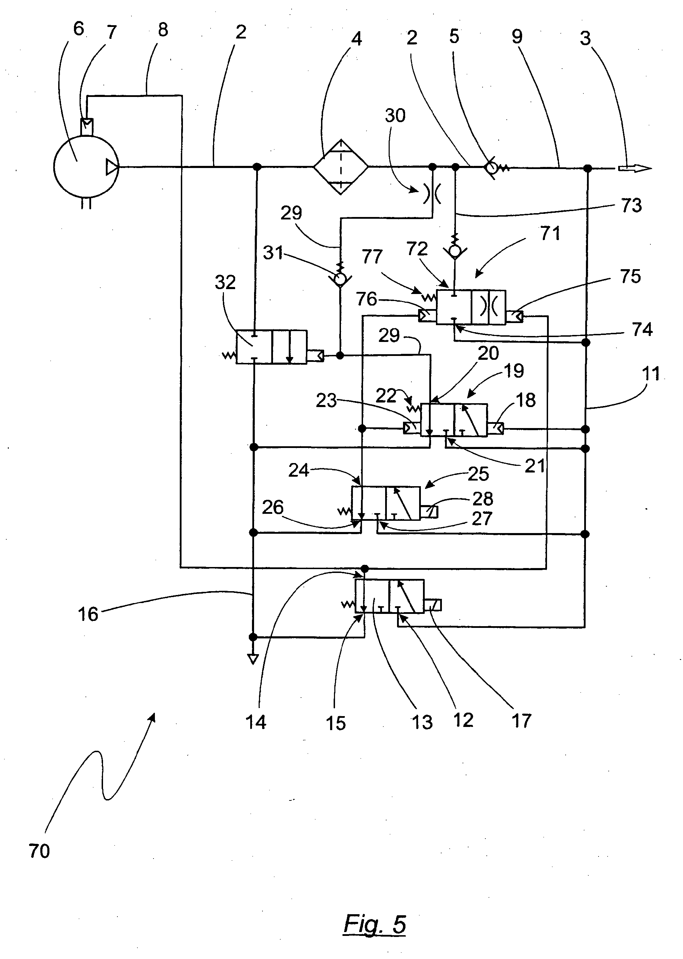

Im Abblasbetrieb ("Cold dump") leitet die Steuereinheit weder dem Kompressorventil 13 als auch dem Regenerationsventil ein elektrisches Signal zu, so dass allein der Durchtrittsquerschnitt der Regenerationsleitung 29 frei gegeben wird. Die Verbindungsleitung 65 hingegen ist gesperrt. Auf diese Weise steht gegenüber dem Regenerationsbetrieb ein vergleichsweise kleinerer Durchtrittsquerschnitt offen. Dadurch kann ein optimaler Kompromiss gefunden werden zwischen dem Abblasen warmer Luft vom Kompressor 6 zum Zweck der Enteisung bei gleichzeitig möglichst geringem Massenstrom in entgegen gesetzter Durchströmungsrichtung des Trockners, der lediglich zur Regeneration gewünscht ist. Fig. 5 zeigt als fünftes Ausführungsbeispiel einer Druckluftaufbereitungseinrichtung eine Druckluftaufbereitungseinrichtung 70, bei der ähnlich der Anordnung nach Fig. 4 ein als 2/2-Wege-Ventil ausgestaltetes Drosselventil 71 mit seinem Arbeitsanschluss 72 eine Verbindungsleitung 73 beherrscht, welche parallel zur Regenerationsleitung 29 in Durchströmungsrichtung 3 hinter der Trocknungseinrichtung 4 in die Druckleitung 2 einmündet. Im Unterschied zu der Anordnung nach Fig. 4 ist bei der Druckaufbereitungseinrichtung 70 der Versorgungsanschluss 74 des Drosselventils 71 fluidisch mit der Vorratsleitung 11 verbunden. Das Drosselventil 71 weist analog dem Drosselventil 41 in Fig.2 zwei druckbetätigbare Steuereingänge auf, welche gegen einander wirken. Ein Steuereingang 75 ist dabei ähnlich den Ausführungsbeispielen nach Fig. 2, 3, 4 mit dem Arbeitsanschluss 24 des Regenerationsventils 25 verbunden. Zur Verknüpfung der Schaltung des Drosselventils 71 und damit der Regenerationssteuerung mit dem Kompressorventil 13 ist ein Koppelungseingang 76 des Drosselventils 71 mit dem Arbeitsanschluss 14 des Kompressorventils 13 fluidisch verbunden.

Im Regenerationsbetrieb bleibt bei unbetätigter Schaltstellung des Regenerationsventils 25 auch der Steuereingang 75 des Drosselventils 71 unbetätigt. Das Kompressorventil 13 verbindet im Regenerationsbetrieb die Vorratsleitung 11 sowohl mit der Kompressorsteuerleitung 8 als auch mit dem Koppelungseingang 76, der das Drosselventil entgegen der permanenten Rückstellkraft einer Ventilfeder 77 in die durchgängige Schaltstellung bringt.

Im Übrigen entspricht die Druckluftaufbereiturigseinrichtung 70 dem bereits zu Fig. 1 beschriebenen Aufbau.

Der Arbeitsanschluss 14 des Kompressorventils 13 dient in dem Ausführungsbeispiel nach Fig. 5 nur der Signalübertragung zum Drosselventil und zur Kompressorschaltung, so dass keine Druckverluste durch Fluidströmungen entstehen. Der Steuerschalter 7 des Kompressors 6 kann somit sicherer geschaltet werden kann. Auch kann das Kompressorventil 13 baulich kleiner dimensioniert und dadurch Kosten eingespart werden.

In nicht dargestellten Ausführungsbeispielen kann das schaltbare Drosselventil, welches analog den Ausführungsbeispielen der Fig. 4 und Fig. 5 eine Verbindungsleitung beherrscht, mit unterschiedlichen Durchtrittsquerschnitten in den Schaltzuständen ausgebildet sein.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Druckluftaufbereitungseinrichtung mit einer Druckluft führenden Druckleitung (2), in der eine Trocknungseinrichtung (4) angeordnet ist, wobei die Druckluftzufuhr mit einem druckbetätigbaren Governor-Ventil (19) steuerbar ist, welches in einem elektrischen Steuerbetrieb von einem elektrisch betätigbaren Magnetventil auf einem hohen Druckniveau vorgesteuert wird und bei Fortfall des elektrischen Signals am Magnetventil auf einem zweiten, niedrigeren Druckniveau anspricht,
**dadurch gekennzeichnet, dass**
Mittel zur Durchführung der Regeneration der Trocknungseinrichtung (4) vorgesehen sind, welche bei Ausfall der elektrischen Versorgung auf dem zweiten, niedrigeren Druckniveau von dem Governor-Ventil (19) steuerbar sind.

2. Druckluftaufbereitungseinrichtung nach Anspruch 1,
**dadurch gekennzeichnet, dass**
die Mittel zur Durchführung der Regeneration eine an das Governor-Ventil (19) angeschlossene Regenerationsleitung (29) zur Zuführung von Regenerationsluft für die Trocknungseinrichtung (4), welche in Durchströmungsrichtung (3) der Druckleitung (2) hinter der Trocknungseinrichtung (4) in die Druckleitung (2) einmündet, und eine Entlüftungsleitung (16) umfassen, welche in Durchströmungsrichtung (3) vor der Trocknungseinrichtung (4) aus der Druckleitung (2) abzweigt.

3. Druckluftaufbereitungseinrichtung nach Anspruch 2,
**dadurch gekennzeichnet, dass**
die Mittel zur Durchführung der Regeneration ein in der Entlüftungsleitung (16) angeordnetes Entlüftungsventil (32) umfassen, dessen Steuereingang (33) mit der Regenerationsleitung (29) fluidisch verbunden ist.

4. Druckluftaufbereitungseinrichtung nach einem der vorhergehenden Ansprüche,
**dadurch gekennzeichnet, dass**
das elektrisch betätigbare und das Governor-Ventil (19) vorsteuernde Magnetventil als den Luftstrom in der Regenerationsleitung (29) steuerndes Regenerationsventil (25) und ein weiteres elektrisch betätigbares Magnetventil als die Druckluftzufuhr steuerndes Kompressorventil (13) angeordnet ist, dessen Arbeitsanschluss (14) mit einem Zufuhrsteuerelement fluidisch verbunden ist.

5. Druckluftaufbereitungseinrichtung nach einem der vorhergehenden Ansprüche,
**dadurch gekennzeichnet, dass**
in der Regenerationsleitung (29) ein Drosselelement angeordnet ist.

6. Druckluftaufbereitungseinrichtung nach einem der vorhergehenden Ansprüche,
**dadurch gekennzeichnet, dass**
die Strömung der Regenerationsluft mittels eines durch Druckbetätigung schaltbaren Drosselventils (41; 51; 61; 71) bestimmbar ist, dessen Steuereingang (42; 52; 62; 75) mit einem Arbeitsanschluss (24) des Regenerationsventils (25) verbunden ist.

7. Druckluftaufbereitungseinrichtung nach Anspruch 6,
**dadurch gekennzeichnet, dass**
das Drosselventil (41; 51; 71) einen durch Druckbetätigung schaltbaren Koppelungseingang (44; 53; 76) aufweist, welcher mit dem Arbeitsanschluss (14) des Kompressorventils (13) verbunden ist und entgegen der Betätigung des Drosselventils durch den Steuereingang (42; 52; 75) und entgegen der Rückstellkraft einer Ventilfeder (43; 54; 77) wirkt.

8. Druckluftaufbereitungseinrichtung nach Anspruch 6 oder 7,
**dadurch gekennzeichnet, dass**
das Drosselventil (51) zwei Schaltzustände mit unterschiedlichen Durchtrittsquerschnitten aufweist, wobei der Durchtrittsquerschnitt im unbetätigten Zustand des Drosselventils (51) kleiner ist als der Durchtrittsquerschnitt im betätigten Zustand.

9. Druckluftaufbereitungseinrichtung nach einem der Ansprüche 6 bis 8,
**dadurch gekennzeichnet, dass**
das Drosselventil (51; 61; 71) in einer parallel zur Regenerationsleitung (29) in Durchströmungsrichtung (3) hinter der Trocknungseinrichtung (4) in die Druckleitung (2) einmündenden Verbindungsleitung (65; 73) angeordnet ist, welche mittels des Kompressorventils (13) mit einer druckführenden Vorratsleitung (11) verbindbar ist, wobei ein Versorgungsanschluss (63; 74) des Drosselventils (51; 61; 71) mit der Vorratsleitung (11) oder mit dem Arbeitsanschluss (14) des Kompressorventils (13) fluidisch verbunden ist.

10. Kraftfahrzeug mit einer Druckluftaufbereitungseinrichtung (1; 40; 50; 60; 70) nach einem der vorhergehenden Ansprüche.

## Claims

1. Compressed air preparation device having a pressure line (2) which conducts compressed air and in which a drying device (4) is arranged, it being possible for the compressed air supply to be controlled by way of a pressure-actuable governor valve (19) which is pilot controlled at a high pressure level by an electrically actuable solenoid valve in an electric control mode and, if the electric signal ceases at the solenoid valve, responds at a second, lower pressure level, **characterized in that** means are provided for carrying out the regeneration of the drying device (4), which means can be controlled by the governor valve (19) at the second, lower pressure level if the electric supply fails.

2. Compressed air preparation device according to Claim 1, **characterized in that** the means for carrying out the regeneration comprise a regeneration line (29) for feeding regeneration air for the drying device (4), which regeneration line (29) is connected to the governor valve (19) and opens into the pressure line (2) downstream of the drying device (4) in the throughflow direction (3) of the pressure line (2), and a ventilating line (16) which branches off from the pressure line (2) upstream of the drying device (4) in the throughflow direction (3).

3. Compressed air preparation device according to Claim 2, **characterized in that** the means for carrying out the regeneration comprise a ventilating valve (32) which is arranged in the ventilating line (16) and the control input (33) of which is connected fluidically to the regeneration line (29).

4. Compressed air preparation device according to one of the preceding claims, **characterized in that** the electrically actuable solenoid valve which pilot controls the governor valve (19) is arranged as a regeneration valve (25) which controls the air flow in the regeneration line (29), and a further electrically actuable solenoid valve is arranged as a compressor valve (13) which controls the compressed air feed and the working connection (14) of which is connected fluidically to a feed control element.

5. Compressed air preparation device according to one of the preceding claims, **characterized in that** a throttle element is arranged in the regeneration line (29).

6. Compressed air preparation device according to one of the preceding claims, **characterized in that** the flow of the regeneration air can be defined by means of a throttling valve (41; 51; 61; 71) which can be switched by pressure actuation and the control input (42; 52; 62; 75) of which is connected to a working connection (24) of the regeneration valve (25).

7. Compressed air preparation device according to Claim 6, **characterized in that** the throttling valve (41; 51; 71) has a coupling input (44; 53; 76) which can be switched by pressure actuation, is connected to the working connection (14) of the compressor valve (13) and acts counter to the actuation of the throttling valve by the control input (42; 52; 75) and counter to the restoring force of a valve spring (43; 54; 77).

8. Compressed air preparation device according to Claim 6 or 7, **characterized in that** the throttling valve (51) has two switching states with different passage cross sections, the passage cross section in the non-actuated state of the throttling valve (51) being smaller than the passage cross section in the actuated state.

9. Compressed air preparation device according to one of Claims 6 to 8, **characterized in that** the throttling valve (51; 61; 71) is arranged in a connecting line (65; 73) which opens into the pressure line (2) parallel to the regeneration line (29) downstream of the drying device (4) in the throughflow direction (3) and can be connected to the pressure-conducting store line (11) by means of the compressor-valve (13), a supply connection (63; 74) of the throttling valve (51; 61; 71) being connected fluidically to the store line (11) or to the working connection (14) of the compressor valve (13).

10. Motor vehicle having a compressed air preparation device (1; 40; 50; 60; 70) according to one of the preceding claims.

## Revendications

1. Dispositif de préparation d'air comprimé comprenant une conduite de pression (2) conduisant l'air comprimé, dans laquelle est disposé un dispositif de séchage (4), l'alimentation en air comprimé pouvant être commandée par une soupape de régulation actionnée par la pression (19), laquelle est pilotée en mode de commande électrique par une électrovanne à commande électrique à un niveau de pression élevé et, en l'absence du signal électrique au niveau de l'électrovanne, fonctionne à un deuxième niveau de pression inférieur,
**caractérisé en ce que**
des moyens sont prévus pour mettre en oeuvre la régénération du dispositif de séchage (4), lesquels, en l'absence de l'alimentation électrique, peuvent être commandés au deuxième niveau de pression inférieur par la soupape de régulation (19).

2. Dispositif de préparation d'air comprimé selon la revendication 1,
**caractérisé en ce que**
les moyens pour mettre en oeuvre la régénération comprennent une conduite de régénération (29) raccordée à la soupape de régulation (19) pour l'alimentation d'air de régénération pour le dispositif de séchage (4), laquelle débouche, dans la direction d'écoulement (3) de la conduite de pression (2), derrière le dispositif de séchage (4) dans la conduite de pression (2), et une conduite de désaérage (16) qui bifurque depuis la conduite de pression (2) dans la direction d'écoulement (3) avant le dispositif de séchage (4).

3. Dispositif de préparation d'air comprimé selon la revendication 2,
**caractérisé en ce que**
les moyens pour mettre en oeuvre la régénération comprennent une soupape de désaérage (32) disposée dans la conduite de désaérage (16), dont l'entrée de commande (33) est connectée fluidiquement à la conduite de régénération (29).

4. Dispositif de préparation d'air comprimé selon l'une quelconque des revendications précédentes,
**caractérisé en ce que**
l'électrovanne à commande électrique et pilotant la soupape de régulation (19) est réalisée en tant que soupape de régénération (25) commandant le flux d'air dans la conduite de régénération (29) et une électrovanne supplémentaire à commande électrique est réalisée en tant que soupape de compresseur (13) commandant l'apport en air comprimé, le raccord de travail (14) de la soupape de compresseur étant connecté fluidiquement à un élément de commande d'alimentation.

5. Dispositif de préparation d'air comprimé selon l'une quelconque des revendications précédentes,
**caractérisé en ce**
**qu'**un élément d'étranglement est disposé dans la conduite de régénération (29).

6. Dispositif de préparation d'air comprimé selon l'une quelconque des revendications précédentes,
**caractérisé en ce que**
l'écoulement de l'air de régénération peut être déterminé au moyen d'une soupape d'étranglement (41 ; 51 ; 61 ; 71) pouvant être commutée sous l'action de la pression, dont l'entrée de commande (42 ; 52 ; 62 ; 75) est connectée à un raccord de travail (24) de la soupape de régénération (25).

7. Dispositif de préparation d'air comprimé selon la revendication 6,
**caractérisé en ce que**
la soupape d'étranglement (41 ; 51 ; 71) présente une entrée d'accouplement (44 ; 53 ; 76) pouvant être commutée par l'action de la pression, laquelle est connectée au raccord de travail (14) de la soupape de compresseur (13) et agit à l'encontre de l'actionnement de la soupape d'étranglement par l'entrée de commande (42 ; 52 ; 75) et à l'encontre de la force de rappel d'un ressort de soupape (43 ; 54 ; 77).

8. Dispositif de préparation d'air comprimé selon la revendication 6 ou 7,
**caractérisé en ce que**
la soupape d'étranglement (51) présente deux états de commutation avec des sections transversales de passage différentes, la section transversale de passage dans l'état non actionné de la soupape d'étranglement (51) étant inférieure à la section transversale de passage dans l'état actionné.

9. Dispositif de préparation d'air comprimé selon l'une quelconque des revendications 6 à 8,
**caractérisé en ce que**
la soupape d'étranglement (51 ; 61 ; 71) est disposée dans une conduite de connexion (65 ; 73) débouchant dans la conduite de pression (2) parallèlement à la conduite de régénération (29) dans la direction d'écoulement (3) derrière le dispositif de séchage (4), laquelle conduite de connexion peut être connectée au moyen de la soupape de compresseur (13) à une conduite de réserve conduisant la pression (11), un raccord d'alimentation (63 ; 74) de la soupape d'étranglement (51 ; 61 ; 71) étant connecté fluidiquement à la conduite de réserve (11) ou au raccord de travail (14) de la soupape de compresseur (13).

10. Véhicule automobile comprenant un dispositif de préparation d'air comprimé (1 ; 40 ; 50 ; 60 ; 70) selon l'une quelconque des revendications précédentes.
